# EUROPEAN PATENT SPECIFICATION

(11) **EP 4 253 144 B1**
(45) Date of publication and mention of the grant of the patent: **15.10.2025**
(21) Application number: 23153895.0
(22) Date of filing: 30.01.2023
(51) Int. Cl.: B60N 2/56, B60N 2/58

(54) **VEHICULAR SEAT STRUCTURE**
STRUKTUR EINES FAHRZEUGSSITZES
STRUCTURE DE SIÈGE VÉHICULAIRE

(30) Priority: 30.03.2022 JP 2022056675
(43) Date of publication of application: 04.10.2023
(73) Proprietor: Suzuki Motor Corporation, Hamamatsu-shi, Shizuoka 432-8611 (JP)
(72) Inventor: KANEKO, Wataru, Hamamatsu-shi, Shizuoka, 432-8611 (JP); KAWAKUBO, Shohei, Hamamatsu-shi, Shizuoka, 432-8611 (JP); KATARIA, Nishant, 110070 New Delhi (IN)
(74) Representative: Haseltine Lake Kempner LLP

(56) References cited:
- JP-A- 2004 224 108
- US-A1- 2007 107 440
- US-B2- 8 752 892

## Description

### [Technical Field]

The present invention relates to a vehicular seat structure.

### [Background Art]

Conventionally, as a seat used in a vehicle such as an automobile, a seat with an air conditioning function that is capable of conditioning air around a seating surface of a seating portion and a seating surface of a seatback is known. A vehicular seat with an air conditioning function includes ventilation portions (ventilation ports) provided in cushion materials forming the seating surfaces and a blower device (fan) at a position in communication with the ventilation portions. For example, Patent Literature 1 discloses a vehicular seat including a rear seat face air outlet provided in a back surface of a seatback on a front seat side. The vehicular seat has a structure in which the rear seat face air outlet communicates with a back surface air passage through which conditioned air from an indoor air conditioning unit is guided and a blowing direction of the conditioned air to the rear seat side can be adjusted by a vertical adjustment louver provided at the rear seat face air outlet.

### [Citation List]

### [Patent Literature]

[Patent Literature 1] WO 2016/158472 A1

A vehicle seat including a blower is known from US2012/0256450. A seat air conditioner for a vehicle is known from JP2004 224108. US2007/0107440 discloses an air flow device incorporated into a seat for a vehicle.

### [Summary of Invention]

### [Problem to be Solved by the Invention]

However, there is a concern that if the ventilation portion such as the rear seat face air outlet is provided in the back surface of the seatback on the front seat side in the conventional vehicular seat structure as described above, the ventilation portion will be brought into a state in which the ventilation portion is exposed to the vehicle interior, is in view of an occupant in the rear seat, and thus degrades the appearance of the vehicular seat, and ultimately the aesthetic appearance of the vehicle interior. Also, in a case in which the ventilation portion is installed to be exposed to the vehicle interior, it is necessary to make arrangements to prevent a load from concentrating on an article or the like when the article or the like comes into contact with the ventilation portion.

The present invention has been made in view of the above points, and an object thereof is to provide a vehicular seat structure capable of curbing concentration of a load on an article or the like when the article or the like comes into contact with a ventilation portion while avoiding exposure of the ventilation portion to a vehicle interior.

### [Means for Solving the Problem]

In order to achieve the above object, an aspect of a vehicular seat structure according to the present invention provides a vehicular seat structure including: a cushion material that forms a seating surface; a blower device that conditions air around the seating surface, and a seat cover that covers the cushion material. In the vehicular seat structure, the seat cover includes a ventilation portion that communicates with the blower device, and is formed at a position at which the ventilation portion covers a part different from the seating surface of the cushion material, the ventilation portion having air permeability, and a covering portion that is formed at a position at which the covering portion covers the ventilation portion from outside of the seat.

### [Advantageous Effects of Invention]

According to the aspect of the vehicular seat structure of the present invention, it is possible to curb concentration of a load on an article or the like when the article or the like comes into contact with the ventilation portion while avoiding exposure of the ventilation portion to the vehicle interior by providing the ventilation portion at the seat cover such that the ventilation portion is covered with the covering portion from the outside of the seat.

### [Brief Description of Drawings]

[Figure 1] Figure 1 is a perspective view illustrating an appearance of a vehicular seat structure according to an embodiment of the present invention.
[Figure 2] Figure 2 is a rear view illustrating a state in which a headrest has been removed from a seat in Figure 1 and a covering portion of a seatback cover has been lifted up.
[Figure 3] Figure 3 is a rear view illustrating a state in which a seat cover of the seat in Figure 2 has been removed.
[Figure 4] Figure 4 is a rear view illustrating a state in which a cushion material of the seat in Figure 3 has been removed.
[Figure 5] Figure 5 is a sectional view seen from the arrow direction of the A-A line of Figure 2.
[Figure 6] Figure 6 is a rear view illustrating a state in which a headrest has been removed from a seat and a covering portion of a seatback cover has been lifted up according to a modification example related to the above embodiment.

### [Mode for Carrying Out the Invention]

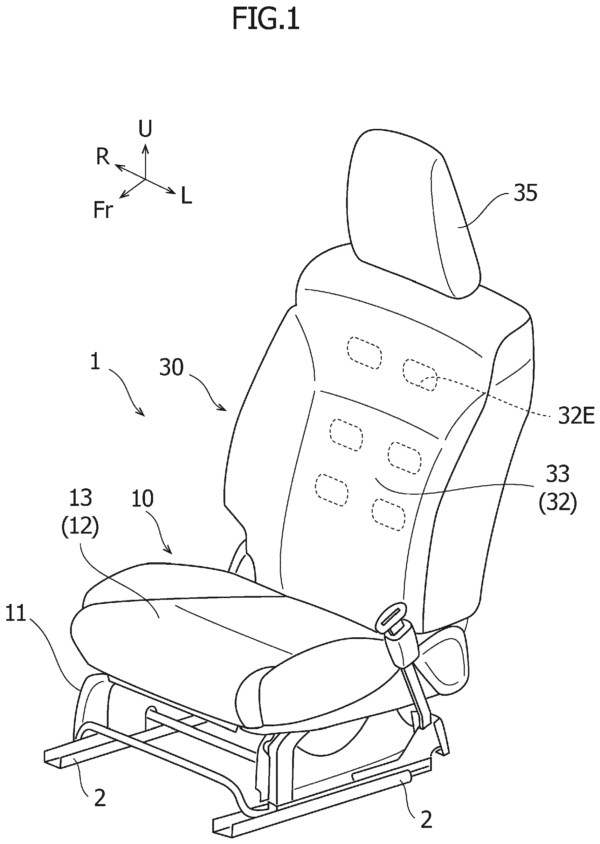

Hereinafter, a vehicular seat structure according to an embodiment of the present invention will be described with reference to the drawings (Figures 1 to 5). Note that in the drawing, the direction of the arrow Fr indicates a front side in a front-rear direction of a vehicular seat. The "front portion (front end) and rear portion (rear end)" in the description of the embodiment corresponds to the front portion and the rear portion in the seat front-rear direction. Also, the front side in the seat front-rear direction in the present embodiment corresponds to the front side in a vehicle front-rear direction. The direction of the arrow R and the direction of the arrow L indicate the right side and the left side when an occupant is seated in the vehicular seat. The direction of the arrow U indicates the upper side.

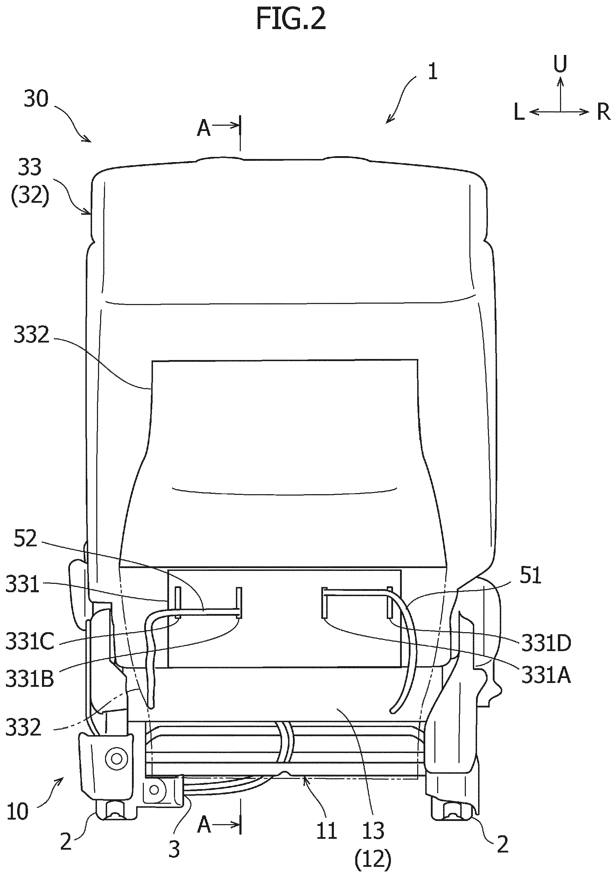

Figure 1 is a perspective view illustrating an appearance of a vehicular seat 1 to which a structure according to the embodiment is applied. Also, Figure 2 is a rear view of the vehicular seat 1 in Figure 1. Note that Figure 2 illustrates a state in which a headrest 35 of the vehicular seat 1 has been removed and a covering portion 332 of a seatback cover 33 has been lifted upward behind the seat. The covering portion 332 is brought into a state in which it covers the front side on the seat lower side as illustrated by the two-dotted dashed line in Figure 2 when the vehicular seat 1 is used.

In Figures 1 and 2, the vehicular seat 1 includes a seating portion 10 and a seatback 30.

The seating portion 10 is a part where an occupant is seated. The seating portion 10 includes a seating portion frame 11, a seating portion cushion 12 that forms a seating surface, and a seating portion cover 13 that covers the seating portion cushion 12.

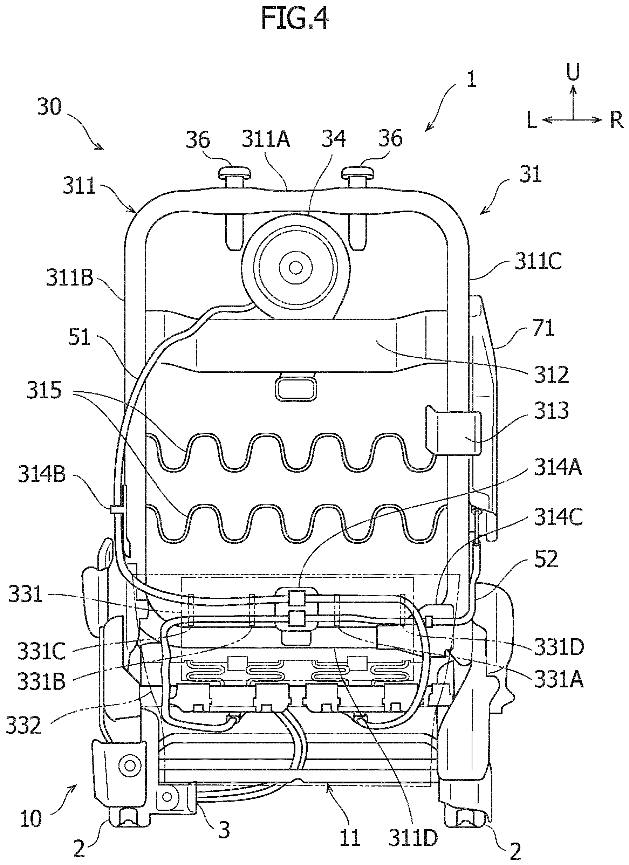

The seatback 30 is a part extending upward from the rear portion of the seating portion 10 and is configured to support an upper body, in particular, of the occupant who is seated in the seating portion 10. The seatback 30 includes a seatback frame 31 (Figure 4, which will be described later), a seatback cushion 32 that forms the seating surface, a seatback cover 33 that covers the seatback cushion 32, a blower fan 34 that conditions air around the seating surface, and a headrest 35 that supports the head portion of the occupant.

Note that in the present embodiment, the seatback cushion 32 corresponds to the "cushion material" in the present invention, the seatback cover 33 corresponds to the "seat cover" in the present invention, and the blower fan 34 corresponds to the "blower device" in the present invention. Hereinafter, each member of the vehicular seat 1 will be specifically described.

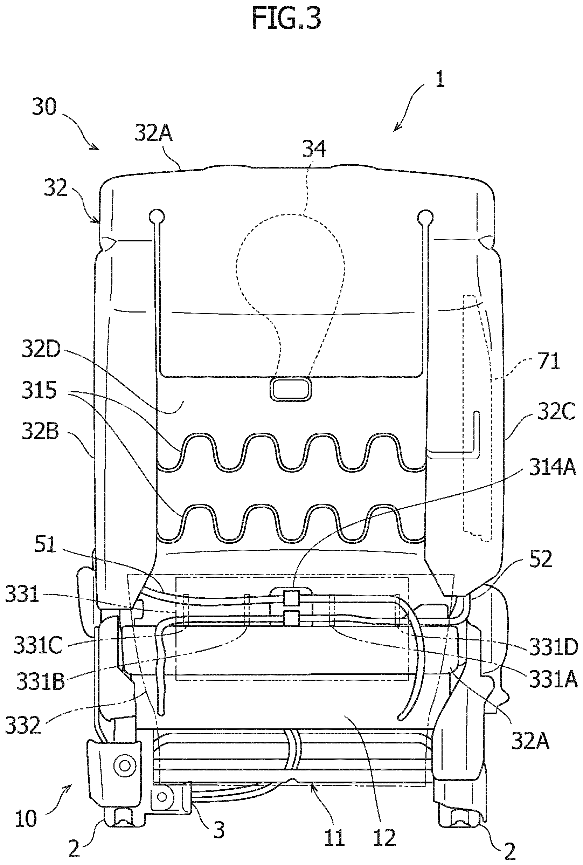

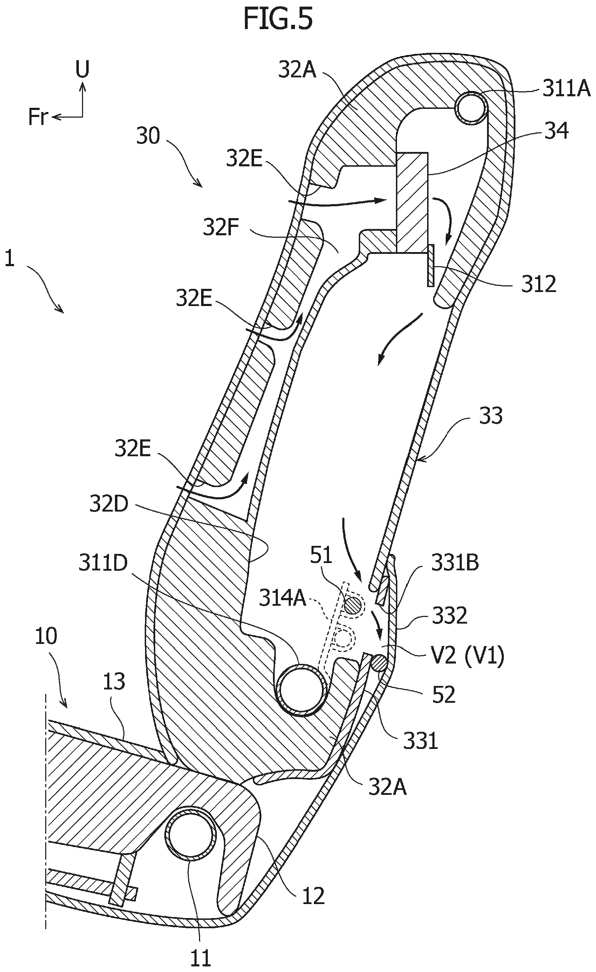

Figure 3 is a rear view illustrating a state in which the seating portion cover 13 and the seatback cover 33 have been removed in the vehicular seat 1 in Figure 2. Also, Figure 4 is a rear view illustrating a state in which the seating portion cushion 12 and the seatback cushion 32 have been removed in the vehicular seat 1 in Figure 3. Moreover, Figure 5 is a sectional view seen from the arrow direction of the A-A line of Figure 2.

As illustrated in Figures 1 to 5, the seating portion frame 11 of the seating portion 10 configures a skeleton of the seating portion 10. A lower portion of the seating portion frame 11 has parts on both sides in the seat width direction movably attached to left and right seat rails 2 via traveling portions (not illustrated) (Figures 1 to 4). The seat rails 2 are provided at a floor portion (not illustrated) in the vehicle interior and extend in the vehicle front-rear direction.

The seating portion cushion 12 has elastic properties and is installed at an upper portion of the seating portion frame 11 (Figures 1 to 3 and 5). An upper portion of the seating portion cushion 12 forms a seating surface where the occupant is seated.

The seating portion cover 13 is a trim covering the seating portion cushion 12 from the upper side (Figures 1 and 2). The seating portion cover 13 covers the upper portion (seating surface), the front portion, the rear portion, and both left and right side portions of the seating portion cushion 12.

The seatback frame 31 of the seatback 30 includes a frame main body 311, a fan fixing bracket 312, an airbag fixing bracket 313, a plurality of routing brackets 314A to 314C, and an S-shaped spring 315 (Figures 4 and 5).

The frame main body 311 is a member configuring a skeleton of the seatback frame 31 and is formed into a substantially rectangular shape by bending a pipe-shaped member (Figure 4). The frame main body 311 includes an upper cross frame 311A extending in the seat width direction, left and right side frames 311B and 311C extending downward from left and right ends of the upper cross frame 311A and disposed to be parallel to each other, and a lower cross frame 311D extending in the seat width direction to connect lower ends of the left and right side frames 311B and 311C. The upper cross frame 311A and the lower cross frame 311D extend horizontally and in parallel with each other. Each of the left and right side frames 311B and 311C extends in an intersecting direction that intersects the seat width direction. Note that in the present embodiment, the left side frame 311B corresponds to the "first side frame" in the present invention, the right side frame 311C corresponds to the "second side frame" in the present invention, and the lower cross frame 311D corresponds to the "cross frame" in the present invention.

The fan fixing bracket 312 extends in the seat width direction and has both end portions in the longitudinal direction attached to upper portions of the left and right side frames 311B and 311C (Figures 4 and 5). The blower fan 34 is fixed to an intermediate part of the fan fixing bracket 312 in the longitudinal direction. In other words, the blower fan 34 is installed near the center of the upper portion of the seatback 30 in the seat width direction in the vehicular seat 1 according to the present embodiment.

A flexible fan connecting wire harness (first cord-shaped element) 51 is connected to the blower fan 34. The fan connecting wire harness 51 supplies power from a battery device (not shown) mounted in the vehicle body to the blower fan 34. The fan connecting wire harness 51 is supported at a predetermined position along the frame main body 311 by routing brackets 314A and 314B. Here, the routing bracket 314A is attached to the center portion of the lower cross frame 311D, and the routing bracket 314B is attached to the lower portion of the left side frame 311B. Specific routing of the fan connecting wire harness 51 will be described later.

The airbag fixing bracket 313 is attached to the center portion of the right side frame 311C in the seat up-down direction (Figure 4). An airbag device 71 extending along the right side frame 311C is fixed to the airbag fixing bracket 313. The airbag device 71 is a side airbag for protecting the occupant at the time of side collision and is disposed on the outer side in the vehicle width direction in the vehicle interior.

A flexible airbag connecting wire harness (second cord-shaped element) 52 is connected to the airbag device 71. The airbag connecting wire harness 52 supplies power from the battery device to the airbag device 71. The airbag connecting wire harness 52 is supported at a predetermined position along the frame main body 311 by the routing bracket 314A and the routing bracket 314C which is attached to the right end portion of the lower cross frame 311D. Specific routing of the airbag connecting wire harness 52 will be described later.

Note that in the present embodiment, the fan connecting wire harness 51 and the airbag connecting wire harness 52 correspond to the "seat components" in the present invention. Also, the airbag device 71 corresponds to the "seat-side device" in the present invention, and the battery device corresponds to the "vehicle body-side device" in the present invention.

The S-shaped spring 315 is disposed in the seat width direction to connect the left and right side frames 311B and 311C of the frame main body 311 (Figures 3 and 4). In the present embodiment, two S-shaped springs 315 are disposed with a space therebetween in the up-down direction.

The seatback cushion 32 includes a main body portion 32A, left and right side cushion portions 32B and 32c, and a recessed portion 32D (Figures 1 to 3 and 5).

The main body portion 32A is a part that has an elastic property and covers the frame main body 311 of the seatback frame 31. Specifically, the upper portion of the main body portion 32A covers the upper cross frame 311A of the frame main body 311 from the upper side, and the lower portion of the main body portion 32A covers the lower cross frame 311D of the frame main body 311 from the lower side (Figure 5). The front surface of the main body portion 32A is a seating surface (supporting surface) that supports the back of the occupant. A plurality of air outlet ports 32E are formed on the front surface side of the main body portion 32A (Figures 1 and 5). Each air outlet port 32E communicates with an air flow path 32F formed inside the main body portion 32A, and air around the seating surface is guided to the blower fan 34 through each air outlet port 32E and the flow path 32F, or air from the blower fan 34 is blown to the seating surface through the flow path 32F and each air outlet port 32E (Figure 5).

The left and right side cushion portions 32B and 32C have elastic properties, are disposed on the outer sides of the main body portion 32A in the seat width direction, and extend in the up-down direction (Figures 1 and 3). The left side cushion portion 32B covers the left side frame 311B of the seatback frame 31 from a lateral side. The right side cushion portion 32C covers the right side frame 311C of the seatback frame 31 and the airbag device 71 from a lateral side.

The recessed portion 32D is provided between the left and right side cushion portions 32B and 32C on the rear surface side of the main body portion 32A and is recessed on the seat front side (Figures 3 and 5). An upper end of the recessed portion 32D is located at an intermediate portion of the main body portion 32A in the up-down direction, and a lower end of the recessed portion 32D is located at a lower portion of the main body portion 32A. The two S-shaped springs 315 are disposed across the recessed portion 32D inside the recessed portion 32D.

The seatback cover 33 is a trim covering the seatback cushion 32 form the upper side and covers the front rear surfaces of the main body portion 32A of the seatback cushion 32 and outer side surfaces of the left and right side cushion portions 32B and 32C (Figures 1, 2, and 5). A periphery of a region facing each air outlet port 32E in a part of the seatback cover 33 covering the front surface of the main body portion 32A is configured to have higher air permeability than the other region of the part. Also, the seatback cover 33 in the present embodiment includes a ventilation portion 331 and a covering portion 332 at a part covering a lower side of the rear surface of the seatback cushion 32 (Figures 2 to 5). The dashed-two dotted lines illustrated in Figures 3 and 4 virtually illustrate outer shapes and arrangement of the ventilation portion 331 and the covering portion 332 of the seatback cover 33 when the vehicular seat 1 is used.

The ventilation portion 331 communicates with the blower fan 34 and is formed at a position at which the ventilation portion covers a part different from the seating surface (front surface) of the seatback cushion 32. In the present embodiment, an internal space of the recessed portion 32D of the seatback cushion 32 communicates with the blower fan 34, and the ventilation portion 331 is formed in the seatback cover 33 from a position at which the seatback cover 33 faces the front wall lower portion of the recessed portion 32D to a position at which the seatback cover 33 covers the rear surface lower end portion of the main body portion 32A (Figures 2 to 5). The ventilation portion 331 is formed using a cloth-like material (for example, a queens cord) with high air permeability that is similar to the material around the region of the seatback cover 33 facing each air outlet port 32E. In other words, the periphery of the region of the seatback cover 33 facing each air outlet port 32E and the ventilation portion 331 are configured to have higher air permeability than that of the other parts. Note that the material used for the ventilation portion 331 may or may not be translucent.

Specifically, the ventilation portion 331 is formed into a substantially rectangular shape extending in the seat width direction in a rear view. However, the shape of the ventilation portion 331 is not limited to the above example. The entire width of the ventilation portion 331 in the seat width direction is narrower than the entire width of the main body portion 32A of the seatback cushion 32. The upper end part and both the left and right end parts of the ventilation portion 331 are sewn to the rear-surface-side lower portion of the seatback cover 33. The lower part of the ventilation portion 331 covers the main body portion 32A so as to roll up the main body portion 32A from the rear-surface-side lower end toward the lower-surface-side front side of the main body portion 32A of the seatback cushion 32 (Figure 5).

The covering portion 332 is formed at a position where the covering portion 332 covers the ventilation portion 331 from the outside of the seat (Figures 2 to 5). The covering portion 332 is formed using a cloth-like material (for example, a needle punched carpet) with low air permeability and substantially no translucency. The covering portion 332 is formed into a substantially trapezoidal shape with the entire width in the seat width direction narrowed from the upper side toward the lower side in a rear view in a state in which the vehicular seat 1 is used without being lifted upward on the seat back side (a state in which the covering portion 332 covers the front side of the seat lower side). However, the shape of the covering portion 332 is not limited to the above example. The entire width of the covering portion 332 on the upper end side is equivalent to the entire width of the main body portion 32A of the seatback cushion 32 or is wider than the entire width of the main body portion 32A. The upper end part of the covering portion 332 is sewn to the rear-surface-side lower portion of the seatback cover 33 at a position at which the upper end part substantially overlaps the upper end part of the ventilation portion 331 (Figure 5). Both the left and right end parts and the lower end part of the covering portion 332 are not sewn to the seatback cover 33. In other words, the parts of the covering portion 332 other than the sewn section are configured to be able to be disposed with a space on the seat rear side from the rear-surface-side lower portion including the ventilation portion 331 of the seatback cover 33. The lower part of the covering portion 332 covers the main body portion 32A and the seating portion cushion 12 from the rear-surface-side lower end of the main body portion 32A of the seatback cushion 32 toward the lower-surface front side of the seating portion cushion 12 so as to roll the main body portion 32A and the seating portion cushion 12.

Also, the ventilation portion 331 is provided with a through-hole at a position at which the ventilation portion 331 faces the covering portion 332. In the present embodiment, four through-holes 331A, 331B, 331C, and 331D, for example, are provided at spaces in the seat width direction at parts of the ventilation portion 331 covering the recessed portion 32D of the seatback cushion 32 (Figures 2 to 4). Each of the through-holes 331A to 331D penetrates through the ventilation portion 331 in the seat front-rear direction and has a slit shape extending in the seat up-down direction. The lower end part of each of the through-holes 331A to 331D is adjacent to the lower cross frame 311D.

Specifically, the first through-hole 331A and the second through-hole 331B are provided at the center part of the ventilation portion 331 in the seat width direction. The routing bracket 314A is disposed between the first through-hole 331A and the second through-hole 331B in a rear view. The first through-hole 331A is disposed on the side closer to the right side frame 311C (second side frame) than the second through-hole 331B (Figure 4). The second through-hole 331B is disposed on the side closer to the left side frame 311B (first side frame) than the first through-hole 331A. The fan connecting wire harness (first cord-shaped element) 51 is inserted into the first through-hole 331A, and the airbag connecting wire harness (second cord-shaped element) 52 is inserted into the second through-hole 331B (Figure 2). Additionally, the third through-hole 331C is disposed at a space on the left side of the second through-hole 331B. Moreover, the fourth through-hole 331D is disposed at a space on the right side of the first through-hole 331A. Note that the number, the shape, and the arrangement of the through-holes provided in the ventilation portion 331 are not limited to those in the above example.

The blower fan 34 is an air conditioning machine for conditioning air around the seating surface of the seatback 30. The blower fan 34 is configured to be able to rotate in both directions with power supplied by the fan connecting wire harness 51. If the blower fan 34 rotates in one direction (rotates forward), then the air around the seating surface of the seatback 30 is taken from each air outlet port 32E formed on the front surface side of the main body portion 32A of the seatback cushion 32, passes through the flow path 32F inside the main body portion 32A, the blower fan 34, the recessed portion 32D of the main body portion 32A, and the ventilation portion 331 of the seatback cover 33 in this order, and is fed to the rear surface side of the seatback 30. On the other hand, in a case in which the blower fan 34 rotates in the opposite direction (rotates backward), then the air on the rear surface side of the seatback 30 flows in the direction opposite to that at the time of the forward rotation and is fed to the seating surface of the seatback 30.

The headrest 35 is configured to support the head part of the occupant who is seated in the seating portion 10 of the vehicular seat 1. The headrest 35 is detachably attached to the seatback frame 31 by being inserted into a headrest guide 36 (Figure 4) provided at the center part of the upper cross frame 311A of the seatback frame 31.

Next, the routing of the fan connecting wire harness 51 and the airbag connecting wire harness 52 will be specifically described.

The fan connecting wire harness 51 and the airbag connecting wire harness 52 extend from the wire connecting portion 3 toward the seat rear side below the seating portion cushion 12 as illustrated in Figures 2 to 4. Also, the fan connecting wire harness 51 extends up to the right side portion below the seatback frame 31 through the inside of the seating portion cushion 12, and the airbag connecting wire harness 52 extends up to the left side portion below the seatback frame 31 through the inside of the seating portion cushion 12.

The fan connecting wire harness 51 reaching the right side portion below the seatback frame 31 is bent upward and extends up to the part above the lower cross frame 311D of the seatback frame 31. Also, the fan connecting wire harness 51 is bent leftward and extends in the seat width direction above the lower cross frame 311D up to the routing bracket 314A disposed at the center in the seat width direction.

At this time, the fan connecting wire harness 51 is inserted into the first through-hole 331A provided at the ventilation portion 331 of the seatback cover 33 from the seat rear side before the fan connecting wire harness 51 reaching the routing bracket 314A (Figure 2). In other words, the fan connecting wire harness 51 is routed to pass outside the ventilation portion 331 (seat rear side) before being inserted into the first through-hole 331A and pass inside the ventilation portion 331 (seat front side) after being inserted into the first through-hole 331A. The opening area of the first through-hole 331A in the state in which the fan connecting wire harness 51 is inserted thereinto is larger than the sectional area of the fan connecting wire harness 51. Therefore, a clearance is formed between the fan connecting wire harness 51 and the edge of the first through-hole 331A.

Therefore, the part of the fan connecting wire harness 51 located in a section from the right end of the ventilation portion 331 to the first through-hole 331A is disposed between the ventilation portion 331 and the covering portion 332 in a state in which the covering portion 332 of the seatback cover 33 covers the ventilation portion 331 from the outside of the seat (the state of the covering portion 332 illustrated by the dashed-two dotted line in Figure 2). In other words, the fan connecting wire harness 51 is disposed between the ventilation portion 331 and the covering portion 332 in a state in which the fan connecting wire harness 51 is inserted into the first through-hole 331A, and a clearance is formed between the fan connecting wire harness 51 and the edge of the first through-hole 331A. In such a state, a ventilation space V1 is formed with the ventilation portion 331, the covering portion 332, and the fan connecting wire harness 51 (Figure 5). The ventilation space V1 communicates with the vehicle interior space on the right end side in the seat width direction.

The fan connecting wire harness 51 that has reached the routing bracket 314A is supported by the routing bracket 314A and then extends in the seat width direction above the lower cross frame 311D up to the left side frame 311B of the seatback frame 31 (Figure 4). Also, the fan connecting wire harness 51 is bent upward, is supported by the routing bracket 314B attached to the left side frame 311B, and then extends upward along the left side frame 311B. Moreover, the fan connecting wire harness 51 is bent rightward before the fan fixing bracket 312 and extends up to the blower fan 34.

On the other hand, the airbag connecting wire harness 52 that has reached the left side portion of the seatback frame 31 on the lower side is bent upward and extends up to the part above the lower cross frame 311D of the seatback frame 31. Also, the airbag connecting wire harness 52 is bent rightward and extends in the seat width direction above the lower cross frame 311D up to the routing bracket 314A disposed at the center in the seat width direction.

At this time, the airbag connecting wire harness 52 is inserted, from the seat rear side, into the second through-hole 331B provided at the ventilation portion 331 of the seatback cover 33 before reaching the routing bracket 314A (Figure 2). In other words, the airbag connecting wire harness 52 is routed to pass outside the ventilation portion 331 (seat rear side) before being inserted into the second through-hole 331B and pass through the inside of the ventilation portion 331 (seat front side) after being inserted into the second through-hole 331B. The opening area of the second through-hole 331B in the state in which the airbag connecting wire harness 52 is inserted is larger than the sectional area of the airbag connecting wire harness 52. Therefore, a clearance is formed between the airbag connecting wire harness 52 and the edge of the second through-hole 331B.

Therefore, the part of the airbag connecting wire harness 52 located in a section from the left end of the ventilation portion 331 to the second through-hole 331B is disposed between the ventilation portion 331 and the covering portion 332 in a state in which the covering portion 332 of the seatback cover 33 covers the ventilation portion 331 from the outside of the seat (the state of the covering portion 332 illustrated by the dashed-two dotted line in Figure 2). In other words, the airbag connecting wire harness 52 is disposed between the ventilation portion 331 and the covering portion 332 in a state in which the airbag connecting wire harness 52 is inserted into the second through-hole 331B, and a clearance is formed between the airbag connecting wire harness 52 and the edge of the second through-hole 331B. In such a state, a ventilation space V2 is formed with the ventilation portion 331, the covering portion 332, and the airbag connecting wire harness 52 (Figure 5). The ventilation space V2 communicates with the vehicle interior space on the left end side in the seat width direction. Also, the ventilation space V1 formed by the fan connecting wire harness 51 and the ventilation space V2 formed by the airbag connecting wire harness 52 described above communicate with each other in the seat width direction. In other words, the entire ventilation spaces V1 and V2 communicate with the vehicle interior space on both end sides in the seat width direction.

The airbag connecting wire harness 52 that has reached the routing bracket 314A is supported by the routing bracket 314A and then extends in the seat width direction above the lower cross frame 311D up to the routing bracket 314C disposed at the right end portion of the lower cross frame 311D (Figure 4). Also, the airbag connecting wire harness 52 is supported by the routing bracket 314C, is then bent upward, and extends along the right side frame 311C up to the airbag device 71.

Next, effects of the vehicular seat structure according to the present embodiment will be described.

In the vehicular seat 1 with the structure as described above, the blower fan 34 rotates in a desired direction by the fan connecting wire harness 51 supplying power from the battery device to the blower fan 34. Here, effects in a case in which the blower fan 34 rotates (rotates forward) in a direction in which the air around the seating surface of the seatback 30 is sent to the rear surface side of the seatback 30, for example, will be described with reference to Figure 5. Note that since it is possible to consider a case in which the blower fan 34 rotates in the opposite direction (rotates backward) similarly to the case in which the blower fan 34 rotates forward, description thereof will be omitted here.

In the case in which the blower fan 34 rotates forward, the air around the seating surface of the seatback 30 is taken from each air outlet port 32E formed in the main body portion 32A of the seatback cushion 32 and is guided to the blower fan 34 through the flow path 32F inside the main body portion 32A as illustrated by the arrow line in Figure 5. The air passing through the blower fan 34 passes through the space formed between the recessed portion 32D provided on the rear surface side of the main body portion 32A and the seatback cover 33, then passes through the ventilation portion 331 and each of the through-holes 331A to 331D in the seatback cover 33, and is guided to the ventilation spaces V1 and V2 formed between the ventilation portion 331 and the covering portion 332.

In the ventilation spaces V1 and V2 between the ventilation portion 331 and the covering portion 332, a flow of the air passing through the ventilation portion 331 and each of the through-holes 331A to 331D is blocked by the covering portion 332 due to low air permeability of the covering portion 332, and the flowing direction of the air changes in the seat width direction. Then, the air passing in the seat width direction through the ventilation spaces V1 and V2 is fed to the vehicle interior space from the right end side of the ventilation space V1 and the left end side of the ventilation space V2.

As described above, the seatback cover 33 includes the ventilation portion 331 that communicates with the blower fan 34, and is formed at a position at which the ventilation portion 331 covers the part different from the seating surface of the seatback cushion 32, the ventilation portion 331 having air permeability, and the covering portion 332 that is formed at a position at which the covering portion 332 covers the ventilation portion 331 from the outside of the seat in the vehicular seat 1 according to the present embodiment. In such a structure, the ventilation port provided in the aforementioned conventional vehicular seat is configured by the ventilation portion 331 of the seatback cover 33. This allows the ventilation portion 331 to be easily deformed, broken, or displaced when an article or the like comes into contact with the position of the ventilation portion 331 of the seatback cover 33, thereby preventing a load from being concentrated on the article or the like. Also, since the ventilation portion 331 of the seatback cover 33 is covered with the covering portion 332 from the outside of the seat, it is possible to avoid exposure of the ventilation portion 331 to the vehicle interior.

Also, in terms of the seatback cover 33 in the vehicular seat 1 according to the present embodiment, the fan connecting wire harness 51 and the airbag connecting wire harness 52 with flexibility are disposed between the ventilation portion 331 and the covering portion 332, and the ventilation spaces V1 and V2 are formed with the ventilation portion 331, the covering portion 332, the fan connecting wire harness 51, and the airbag connecting wire harness 52. It is possible to enhance air permeability of the ventilation portion 331 of the seatback cover 33 by forming such ventilation spaces V1 and V2. Also, when an article or the like comes into contact, it is possible to deform the fan connecting wire harness 51 and the airbag connecting wire harness 52 with flexibility to absorb a load, or it is possible to move the article or the like along with the wire harnesses on the side of the seatback cushion 32 to absorb the load with the seatback cushion 32. Moreover, since the fan connecting wire harness 51 and the airbag connecting wire harness 52 are also covered with the covering portion 332 of the seatback cover 33, it is also possible to avoid exposure of the wire harnesses to the vehicle interior.

Also, the ventilation portion 331 of the seatback cover 33 includes the through-holes 331A to 331D at positions where the ventilation portion 331 faces the covering portion 332 in the vehicular seat 1 according to the present embodiment. Since the through-holes 331A to 331D are covered with the covering portion 332 in such a structure, it is possible to send air via the through-holes 331A to 331D while avoiding exposure of the through-holes 331A to 331D to the vehicle interior and thereby to enhance blowing efficiency of the blower fan 34.

Also, in the vehicular seat 1 according to the present embodiment, the fan connecting wire harness 51 is disposed between the ventilation portion 331 and the covering portion 332 in a state in which the fan connecting wire harness 51 is inserted into the first through-hole 331A, and a clearance is formed between the fan connecting wire harness 51 and the edge of the first through-hole 331A. Similarly, the airbag connecting wire harness 52 is disposed between the ventilation portion 331 and the covering portion 332 in a state in which the airbag connecting wire harness 52 is inserted into the second through-hole 331B, and a clearance is formed between the airbag connecting wire harness 52 and the edge of the second through-hole 331B. With such a structure, it is possible to secure air permeability of the first and second through-holes 331A and 331B by the clearances even if the first through-holes 331A and 331B are blocked by the fan connecting wire harness 51 and the airbag connecting wire harness 52. Also, since a part of the fan connecting wire harness 51 is disposed on the seat inner side as compared with the first through-hole 331A, and a part of the airbag connecting wire harness 52 is disposed on the seat inner side as compared with the second through-hole 331B, it is possible to efficiently avoid exposure of the wire harnesses routed at positions that are not covered with the covering portion 332 to the vehicle interior. In particular, in the present embodiment, the wire harness is configured to be drawn in from each of the first and second through-holes 331A and 331B disposed on the inner side in the seat width direction among the four through-holes 331A to 331D, and therefore, it is possible to easily perform the work of routing the wire harness.

Also, in the vehicular seat 1 according to the present embodiment, the fan connecting wire harness 51 is supported by the edge of the first through-hole 331A, and the airbag connecting wire harness 52 is supported by the edge of the second through-hole 331B. With such a structure, it is possible to reduce the number of supporting points of the fan connecting wire harness 51 and the airbag connecting wire harness 52 with respect to the seatback frame 31. In this manner, it is possible to reduce the number of installed routing brackets and to thereby achieve improvement in production of the vehicular seat 1 and cost reduction. In addition, it is also possible to lower the likelihood of concentration of a load on an article or the like due to contact between the article or the like and the routing bracket by reducing the number of the routing brackets.

Also, in the vehicular seat 1 according to the present embodiment, the fan connecting wire harness 51 that connects the blower fan 34 to the battery device is routed through the first through-hole 331A, and the airbag connecting wire harness 52 that connects the airbag device 71 to the battery device is routed through the second through-hole 331B. In this manner, it is possible to use the first and second through-holes 331A and 331B as drawing ports of the wire harnesses as well, and thereby simplify the seat structure. Also, since the wire harnesses drawn into the first and second through-holes 331A and 331B are covered with the covering portion 332, it is possible to prevent the appearance of the vehicular seat 1 from being degraded.

Also, in the vehicular seat 1 according to the present embodiment, the routing bracket 314A is provided at the lower cross frame 311D of the seatback frame 31, and the fan connecting wire harness 51 and the airbag connecting wire harness 52 are supported by the routing bracket 314A. The routing bracket 314A is disposed at a position at which the routing bracket 314A faces the covering portion 332 of the seatback cover 33, and the fan connecting wire harness 51 and the airbag connecting wire harness 52 have parts routed between the routing bracket 314A and the ventilation portion 331 of the seatback cover 33. In such a structure, the fan connecting wire harness 51 and the airbag connecting wire harness 52 are supported by the routing bracket 314A attached to the seatback frame 31 with high rigidity. Therefore, it is possible to support the fan connecting wire harness 51 and the airbag connecting wire harness 52 with the edges of the first and second through-holes 331A and 331B without imparting excessive loads on the first and second through-holes 331A and 331B formed at the ventilation portion 331 of the seatback cover 33. Therefore, it is possible to stably route the wire harnesses while curbing an increase in the number of the routing brackets. Additionally, since the wire harnesses with flexibility and the ventilation portion 331 and the covering portion 332 of the seatback cover 33 are disposed between the routing bracket 314A and the vehicle interior space, a load on an article or the like from the routing bracket 314A is absorbed by the wire harnesses and the like when the article or the like comes into contact therewith, and it is possible to effectively curb concentration of the load on the article or the like.

Also, in the vehicular seat 1 according to the present embodiment, the routing bracket 314A is disposed between the first through-hole 331A and the second through-hole 331B. In this manner, since the routing bracket 314A is further covered with the covering portion 332 after being covered with the part of the ventilation portion 331 of the seatback cover 33 located between the first and second through-holes 331A and 331B, it is possible to reliably avoid exposure of the routing bracket 314A to the vehicle interior.

Also, in the vehicular seat 1 according to the present embodiment, the first and second through-holes 331A and 331B are disposed with a space therebetween in the seat width direction, and the ventilation spaces V1 and V2 formed by the ventilation portion 331 and the covering portion 332 of the seatback cover 33 and the wire harnesses 51 and 52 communicate with the vehicle interior space on both end sides in the seat width direction. In such a structure, it is possible to guide, in the seat width direction along the covering portion 332, air that is about to flow in the penetrating direction (seat front-rear direction) of the first and second through-holes 331A and 331B and to feed the air from both end sides of the ventilation spaces V1 and V2 in the seat width direction into the vehicle interior space. In this manner, it is possible to curb a situation in which the air flow on the side of the seatback 30 gives the occupant a sense of discomfort when an occupant is at the position facing the covering portion 332 of the seatback cover 33 on the seat rear side. Specifically, it is possible to prevent the discharged air from blowing directly against the occupant in a case in which the air around the seating surface of the seatback 30 is discharged from the rear surface of the seatback 30. Also, it is possible to prevent the occupant from being given a sense of discomfort that the air in front of the occupant is drawn in a case in which the air on the rear surface side of the seatback 30 is suctioned and blown to the seating surface of the seatback 30.

Also, in the vehicular seat 1 according to the present embodiment, the fan connecting wire harness 51 is routed along the lower cross frame 311D and the left side frame 311B, is supported by the routing bracket 314A, and is inserted into the first through-hole 331A. On the other hand, the airbag connecting wire harness 52 is routed along the lower cross frame 311D and the right side frame 311C, is supported by the routing bracket 314A, and is inserted into the second through-hole 331B. With such a structure, it is possible to easily route the fan connecting wire harness 51 and the airbag connecting wire harness 52 along the seatback frame 31. Also, since the fan connecting wire harness 51 and the airbag connecting wire harness 52 are supported by the routing bracket 314A, it is possible to receive a load with the wire harnesses supported by the routing bracket 314A even if an article or the like approaches the routing bracket 314A and to curb local concentration of the load on the article or the like.

Also, in the vehicular seat 1 according to the present embodiment, the first through-hole 331A is disposed on the side closer to the right side frame 311C than the second through-hole 331B, the second through-hole 331B is disposed on the side closer to the left side frame 311B than the first through-hole 331A, the fan connecting wire harness 51 is installed along the lower cross frame 311D from the first through-hole 331A toward the left side frame 311B, and the airbag connecting wire harness 52 is installed along the lower cross frame 311D from the second through-hole 331B toward the right side frame 311C. At this time, the installation direction of the fan connecting wire harness 51 is the direction opposite to the installation direction of the airbag connecting wire harness 52. Such a structure can facilitate individual routing of the fan connecting wire harness 51 and the airbag connecting wire harness 52.

Next, a modification example of the vehicular seat 1 according to the aforementioned embodiment will be described.

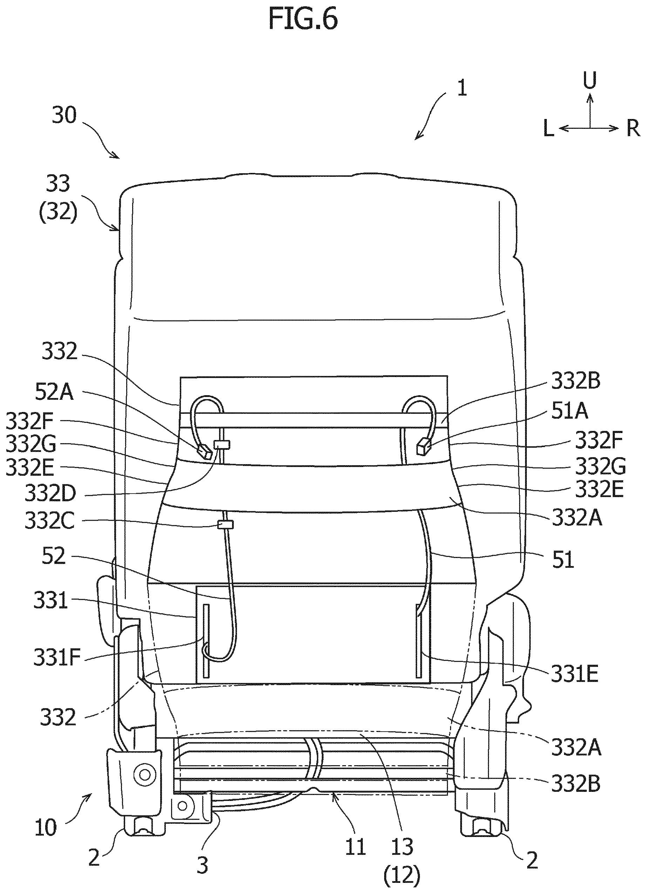

Figure 6 is a rear view illustrating the modification example of the vehicular seat 1. Note that Figure 6 illustrates a state in which the headrest 35 of the vehicular seat 1 has been removed and the covering portion 332 of the seatback cover 33 has been lifted upward on the seat rear side, similarly as in Figure 2 described above.

In Figure 6, the structure of the vehicular seat 1 according to the above modification example is different from the configuration in the case of the aforementioned embodiment in that restricting portions 332A and 332B and holding portions 332C and 332D are provided on an inner side surface (the surface on the side facing the ventilation portion 331) of the covering portion 332 and that the fan connecting wire harness 51 and the airbag connecting wire harness 52 are provided with connectors 51A and 52A, respectively. Also, while the four through-holes 331A to 331D are formed in the ventilation portion 331 of the seatback cover 33 in the aforementioned embodiment, two through-holes 331E and 331F are formed in the ventilation portion 331 in the modification example in Figure 6. Note that since the structures of the modification example other than those described above are similar to the structures in the aforementioned embodiment, description thereof will be omitted here.

The restricting portions 332A and 332B are provided to restrict movement in the seat width direction of the fan connecting wire harness 51 and the airbag connecting wire harness 52 routed on the outside of the ventilation portion 331. Specifically, a plurality of (two in this case) restricting portions 332A and 332B are disposed with a space therebetween in the seat up-down direction on the inner side surface of the covering portion 332 and extend in strip shapes in the seat width direction. Both end parts of each of the restricting portions 332A and 332B in the seat width direction are sewn to both side portions of the inner side surface of the covering portion 332 in the seat width direction.

Specifically, both end parts in the seat width direction of the restricting portion 332A located on the lower side in a state in which the covering portion 332 is lifted up are disposed along both side portions of the region 332E with the entire width in the seat width direction changing in the seat up-down direction in the covering portion 332. Also, both end parts of the restricting portion 332A in the seat width direction are disposed across a boundary part (narrowed part) 332G between the region 332E at which the entire width changes and the region 332F with the constant entire width in the covering portion 332. Both end parts in the seat width direction of the restricting portion 332B located on the upper side in the state in which the covering portion 332 is lifted up are disposed along both side portions of the region 332F with the constant entire width in the seat width direction in the covering portion 332.

The connecting (sewn) part between each of the restricting portions 332A and 332B as described above and the covering portion 332 is disposed at a position offset downward from the ventilation portion 331 in a state during utilization at which the covering portion 332 is not lifted up as illustrated by the dashed-two dotted line in Figure 6 (a state in which the covering portion 332 covers the front side on the seat lower side). In other words, the sewn part of each of the restricting portions 332A and 332B are disposed so as not to overlap the ventilation portion 331 in a rear view. Specifically, in the modification example in Figure 6, the sewn part of each of the restricting portions 332A and 332B is disposed at positions offset on the outer side in the seat width direction and on the seat lower side from the through-holes 331E and 331F of the ventilation portion 331.

A space into which the fan connecting wire harness 51 and the airbag connecting wire harness 52 can be inserted is formed between the intermediate part of the restricting portions 332A and 332B in the seat width direction and the inner side surface of the covering portion 332. The width of the restricting portion 332B on the side closer to the connectors 51A and 52A of the wire harnesses in the seat up-down direction is formed to be narrower than the width of the restricting portion 332A on the side further from the connectors 51A and 52A in the seat up-down direction.

The holding portions 332C and 332D are provided to hold the airbag connecting wire harness 52 on the inner side surface of the covering portion 332. In the modification example in Figure 6, the two holding portions 332C and 332D are provided with a space therebetween in the seat up-down direction with respect to the two restricting portions 332A and 3332B. In other words, the two holding portions 332C and 332D are disposed in the seat up-down direction with the restricting portion 332A interposed therebetween. Note that the number of holding portions is not limited to two, and one, or three or more, holding portions may be provided on the inner side surface of the covering portion 332. Also, a holding portion for holding the fan connecting wire harness 51 may be provided on the inner side surface of the covering portion 332 as needed.

Specifically, the holding portions 332C and 332D preferably have an elastic property or flexibility and can be configured using, for example, skin members, tapes, or the like. In a case in which the holding portions 332C and 332D are configured of skin members, sliding of the airbag connecting wire harness 52 is allowed, and it thus becomes easy to adjust the position of the airbag connecting wire harness 52. On the other hand, in a case in which the holding portions 332C and 332D are configured of tapes, it is possible to restrict sliding of the airbag connecting wire harness 52 around the holding portions 332C and 332D.

The connector 51A of the fan connecting wire harness 51 and the connector 52A of the airbag connecting wire harness 52 are terminals that electrically connect the fan connecting wire harness 51 and the airbag connecting wire harness 52 to other wire harnesses or the like connected to a wire connecting portion 3 below the seating portion cushion 12, for example.

The through-hole 331E on the right side formed in the ventilation portion 331 corresponds to the first through-hole 331A in the aforementioned embodiment and is also used as a drawing port of the fan connecting wire harness 51. Also, the through-hole 331F on the left side corresponds to the second through-hole 331B in the aforementioned embodiment and is also used as a drawing port of the airbag connecting wire harness 52. The through-holes 331E and 331F are disposed at both side parts of the ventilation portion 331 in the seat width direction and extend in the seat up-down direction. Each of the lower end portions of the through-holes 331E and 331F extends up to a position at which the lower end portion overlaps the lower cross frame 311D (Figures 4 and 5) of the seatback frame 31, or below the lower cross frame 311D.

In the modification example of the vehicular seat 1 as described above, it is possible to restrict, with the restricting portions 332A and 332B of the covering portion 332, movement of the fan connecting wire harness 51 and the airbag connecting wire harness 52 to the side further outward than the covering portion 332 in the seat width direction. Therefore, it is possible to reliably curb exposure of the wire harnesses to the vehicle interior. In particular, disposition of both end parts of the restricting portion 332A in the seat width direction along both side portions of the region 332E with the entire width changing in the covering portion 332 changes facilitates guiding of the fan connecting wire harness 51 and the airbag connecting wire harness 52 to the inner side in the seat width direction. Moreover, disposition of both end parts of the restricting portion 332A across the narrowed part 332G of the covering portion 332 can promote the fan connecting wire harness 51 and the airbag connecting wire harness 52 to follow the routing direction (seat up-down direction) on the inner side surface of the covering portion 332. It is thus possible to enhance the effect of curbing exposure of the wire harnesses.

Since the airbag connecting wire harness 52 is positioned by the holding portions 332C and 332D of the covering portion 332 in addition to the restricting portions 332A and 332B as described above, it is possible to more reliably curb exposure of the airbag connecting wire harness 52 to the vehicle interior. In particular, if the holding portion 332D is provided between the two restricting portions 332A and 332B, it is possible to restrict or limit movement and sliding of the airbag connecting wire harness 52 relative to each of the restricting portions 332A and 332B. Since such holding portions 332C and 332D are provided at positions at which the holding portions 332C and 332D do not overlap the restricting portions 332A and 332B, respectively, it is possible to easily perform the work of holding the airbag connecting wire harness 52 with each of the holding portions 332C and 332D.

Also, in the modification example of the vehicular seat 1, the through-holes 331E and 331F of the ventilation portion 331 extend up to positions (or below the positions) at which the through-holes 331E and 331F overlap the lower cross frame 311D, the areas of the through-holes 331E and 331F thus increase, and it becomes easier to distribute air. Moreover, in a state during utilization in which the covering portion 332 is not lifted up, the connecting (sewn) part between the covering portion 332 and the restricting portions 332A and 332B is disposed at the position offset on the outer side in the seat width direction and on the seat lower side from the through-holes 331E and 331F of the ventilation portion 331, such that it is possible to curb a situation in which the air flowing through the through-holes 331E and 331F is prevented by the restricting portions 332A and 332B, making it difficult for the air to be distributed. In particular, if the restricting portions 332A and 332B of the covering portion 332 are disposed not to overlap the ventilation portion 331, it is possible to reliably curb prevention of the air flow into the through-holes 331E and 331F due to the restricting portions 332A and 332B. In other words, prevention of the air flow in the left-right direction in the vicinity of the ventilation portion 331 in Figure 6 due to the restricting portions 332A and 332B of the covering portion 332 is avoided.

Also, since each of the fan connecting wire harness 51 and the airbag connecting wire harness 52 is configured to be able to be separated by the connectors 51A and 52A in the course of the routing direction, it is possible to cause the wire harness separated on the side of the seatback 30 to move along with the covering portion 332 when the covering portion 332 is lifted up. It is thus possible to easily perform the work of routing the fan connecting wire harness 51 and the airbag connecting wire harness 52 and the work of opening and closing the covering portion 332. Additionally, the width of the restricting portion 332B on the side closer to the connectors 51A and 52A of the wire harnesses is formed to be narrower than the width of the restricting portion 332A on the further side such that the parts of the wire harnesses on the side of the connectors 51A and 52A are more likely to slide, thereby making it possible to easily perform the work of connecting the connectors 51A and 52A.

Although the embodiment of the present invention and the modification example thereof have been described above, the present invention is not limited to the aforementioned embodiment and modification example, and various modifications and changes can be made based on the technical idea of the present invention. Although the example in which the blower fan 34 is disposed on the side of the seatback 30 has been described in the aforementioned embodiment and modification example, for example, it is also possible to apply the seat structure of the present invention to a case in which the blower fan 34 is disposed on the side of the seating portion 10.

Also, although the example in which the fan connecting wire harness 51 and the airbag connecting wire harness 52 are disposed between the ventilation portion 331 and the covering portion 332 as seat components with flexibility has been described in the aforementioned embodiment and modification example, seat components (for example, a part of the cushion material, the S-shaped spring, and the like) other than the wire harnesses may be disposed between the ventilation portion 331 and the covering portion 332. The seat components with flexibility in the present invention may be parts obtained by narrowing the materials themselves to give flexibility, or alternatively, elastic elements or the like may be disposed around the parts themselves to give flexibility even if the parts themselves do not have flexibility.

Also, although the example in which the first and second through-holes 331A and 331B are disposed with a space therebetween in the seat width direction has been described in the aforementioned embodiment and modification example, it is possible to dispose the first and second through-holes with a space therebetween in a direction along the surface of the ventilation portion (for example, the seat up-down direction).

Additionally, although the example in which the first to fourth through-holes 331A to 331D are formed in the ventilation portion 331 has been described in the aforementioned embodiment and modification example, a wall surface sectioning the through-holes may be included in a part of the seat cover other than the ventilation portion covered with the covering portion.

Also, although the example in which the upper end part of the covering portions 332 is sewn to the seatback cover 33 and can be lifted on the seat upper side has been described in the aforementioned embodiment and modification example, the side portion of the covering portion in the seat width direction may be configured to be sewn and lifted in the seat width direction or the lower end part of the covering portion may be configured to be sewn and opened on the seat lower side. Furthermore, the covering portion may be configured to be able to be detached from the seat cover. In this case, the covering portion is detachably fixed to the seat cover with a zipper, a surface fastener, a button, or a clip, for example. Additionally, the covering portion may have air permeability like the ventilation portion as long as translucency is low.

### [Reference Signs List]

1 Vehicular seat
2 Seat rail
3 Wire connecting portion
10 Seating portion
11 Seating portion frame
12 Seating portion cushion
13 Seating portion cover
30 Seatback
31 Seatback frame
311 Frame main body
311A Upper cross frame
311B Left side frame (first side frame)
311C Right side frame (second side frame)
311D Lower cross frame (cross frame)
312 Fan fixing bracket
313 Airbag fixing bracket
314A to 314C Routing bracket (bracket)
315 S-shaped spring
32 Seatback cushion (cushion material)
32A Main body portion
32B Left side cushion portion
32C Right side cushion portion
32D Recessed portion
32E Air outlet port
32F Flow path
33 Seatback cover (seat cover)
331 Ventilation portion
331A to 331F Through-hole
332 Covering portion
332A, 332B Restricting portion
332C, 332D Holding portion
34 Blower fan (blower device)
35 Headrest
36 Headrest guide
51 Fan connecting wire harness (first cord-shaped element)
52 Airbag connecting wire harness (second cord-shaped element)
51A, 52AConnecter
71 Airbag device (seat-side device)
V1, V2 Ventilation space

## Claims

1. A vehicular seat structure comprising:
a cushion material (32) that forms a seating surface;
a blower device (34) that conditions air around the seating surface; and
a seat cover (33) that covers the cushion material (32), **characterized in that**
the seat cover (33) includes
a ventilation portion (331) that communicates with the blower device (34), and is formed at a position where the ventilation portion (331) covers a part different from the seating surface of the cushion material (32), the ventilation portion (331) having air permeability, and
a covering portion (332) that is located on the outside of the seat and formed to cover the ventilation portion (331).

2. The vehicular seat structure according to claim 1,
wherein in the seat cover (33), a flexible seat component (51, 52) is disposed between the ventilation portion (331) and the covering portion (332), and a ventilation space (V1, V2) is formed by the ventilation portion (331), the covering portion (332), and the seat component (51, 52).

3. The vehicular seat structure according to claim 2,
wherein the ventilation portion (331) has a through-hole (331A-331F) at a position at which the ventilation portion (331) faces the covering portion (332).

4. The vehicular seat structure according to claim 3,
wherein the seat component (51, 52) is disposed between the ventilation portion (331) and the covering portion (332) in a state in which the seat component (51, 52) is inserted into the through-hole (331A-331F) and a clearance is formed between the seat component (51, 52) and an edge of the through-hole (331A-331F).

5. The vehicular seat structure according to claim 3 or 4,
wherein the seat component (51, 52) is supported by the edge of the through-hole (331A-331F).

6. The vehicular seat structure according to any one of claims 3 to 5,
wherein the seat component (51, 52) is configured of a cord-shaped element (51, 52) that connects the blower device (34) or a seat-side device (71) mounted on a vehicular seat to a vehicle body-side device provided on a side of a vehicle body in which the vehicular seat is installed, and the cord-shaped element (51, 52) is routed through the through-hole (331A-331F).

7. The vehicular seat structure according to claim 6, further comprising:
a seat frame (311) that supports the cushion material (32); and
a bracket (314A) that is formed at the seat frame (311) and supports the cord-shaped element (51, 52),
wherein the bracket (314A) is disposed at a position at which the bracket (314A) faces the covering portion (332), and
wherein the cord-shaped element (51, 52) has a part routed between the bracket (314A) and the ventilation portion (331).

8. The vehicular seat structure according to claim 7,
wherein the through-hole (331A-331F) includes a first through-hole (331A) and a second through-hole (331B) disposed with a space therebetween at positions at which the first through-hole (331A) and the second through-hole (331B) face the covering portion (332), and
wherein the bracket (314A) is disposed between the first through-hole (331A) and the second through-hole (331B).

9. The vehicular seat structure according to claim 8,
wherein the first through-hole (331A) and the second through-hole (331B) are disposed with a space therebetween in a seat width direction, and
wherein the ventilation space (V1, V2) formed by the ventilation portion (331), the covering portion (332), and the cord-shaped element (51, 52) communicates with a vehicle interior space on both end sides in the seat width direction.

10. The vehicular seat structure according to claim 9,
wherein the seat frame (311) includes;
a cross frame (311D) that extends in the seat width direction,
a first side frame (311B) that is provided on a side of one end of the cross frame (311D) in a longitudinal direction and extends in an intersecting direction that intersects the seat width direction, and
a second side frame (311C) that is provided on a side of the other end of the cross frame (311D) in the longitudinal direction and extends in the intersecting direction,
wherein the first through-hole (331A) and the second through-hole (331B) are provided at positions that are adjacent to the cross frame (311D),
wherein the bracket (314A) is fixed to the cross frame (311D),
wherein the cord-shaped element (51, 52) includes;
a first cord-shaped element (51) that is routed along the cross frame (311D) and the first side frame (311B), and
a second cord-shaped element (52) that is routed along the cross frame (311D) and the second side frame (311C),
the first cord-shaped element (51) is supported by the bracket (314A) and is inserted into the first through-hole (331A), and
the second cord-shaped element (52) is supported by the bracket (314A) and is inserted into the second through-hole (331B).

11. The vehicular seat structure according to claim 10,
wherein the first through-hole (331A) is disposed on a side closer to the second side frame (311C) than the second through-hole (331B),
wherein the second through-hole (331B) is disposed on a side closer to the first side frame (311B) than the first through-hole (331A), and
wherein the first cord-shaped element (51) and the second cord-shaped element (52) are routed such that an installation direction of the second cord-shaped element (52) installed along the cross frame (311D) from the second through-hole (331B) toward the second side frame (311C) is a direction opposite to an installation direction of the first cord-shaped element (51) installed along the cross frame (311D) from the first through-hole (331A) toward the first side frame (311B).

## Patentansprüche

1. Fahrzeugsitzstruktur, umfassend:
ein Polstermaterial (32), das eine Sitzfläche bildet;
eine Gebläsevorrichtung (34), die die Luft um die Sitzfläche herum aufbereitet; und
einen Sitzbezug (33), der das Polstermaterial (32) bedeckt, **dadurch gekennzeichnet, dass**
der Sitzbezug (33) einschließt
einen Belüftungsabschnitt (331), der mit der Gebläsevorrichtung (34) in Verbindung steht und an einer Position ausgebildet ist, an der der Belüftungsabschnitt (331) einen von der Sitzfläche des Polstermaterials (32) verschiedenen Teil abdeckt, wobei der Belüftungsabschnitt (331) luftdurchlässig ist, und
einen Abdeckungsabschnitt (332), der sich an der Außenseite des Sitzes befindet und so geformt ist, dass er den Belüftungsabschnitt (331) abdeckt.

2. Fahrzeugsitzstruktur nach Anspruch 1,
wobei in dem Sitzbezug (33) eine flexible Sitzkomponente (51, 52) zwischen dem Belüftungsabschnitt (331) und dem Abdeckungsabschnitt (332) angeordnet ist, und ein Belüftungsraum (V1, V2) durch den Belüftungsabschnitt (331), den Abdeckungsabschnitt (332) und die Sitzkomponente (51, 52) gebildet wird.

3. Fahrzeugsitzstruktur nach Anspruch 2,
wobei der Belüftungsabschnitt (331) ein Durchgangsloch (331A-331F) an einer Position aufweist, an der der Belüftungsabschnitt (331) dem Abdeckungsabschnitt (332) gegenüberliegt.

4. Fahrzeugsitzstruktur nach Anspruch 3,
wobei die Sitzkomponente (51, 52) zwischen dem Belüftungsabschnitt (331) und dem Abdeckungsabschnitt (332) in einem Zustand angeordnet ist, in dem die Sitzkomponente (51, 52) in das Durchgangsloch (331A-331F) eingesetzt ist und ein Zwischenraum zwischen der Sitzkomponente (51, 52) und einem Rand des Durchgangslochs (331A-331F) gebildet ist.

5. Fahrzeugsitzstruktur nach Anspruch 3 oder 4,
wobei die Sitzkomponente (51, 52) von der Kante des Durchgangslochs (331A-331F) getragen wird.

6. Fahrzeugsitzstruktur nach einem der Ansprüche 3 bis 5,
wobei die Sitzkomponente (51, 52) aus einem schnurförmigen Element (51, 52) konfiguriert ist, das die Gebläsevorrichtung (34) oder eine sitzseitige Vorrichtung (71), die an einem Fahrzeugsitz angebracht ist, mit einer fahrzeugkarosserieseitigen Vorrichtung verbindet, die an einer Seite einer Fahrzeugkarosserie bereitgestellt ist, in der der Fahrzeugsitz installiert ist, und das schnurförmige Element (51, 52) durch das Durchgangsloch (331A-331F) geführt ist.

7. Fahrzeugsitzstruktur nach Anspruch 6, ferner umfassend:
einen Sitzrahmen (311), der das Polstermaterial (32) trägt; und
eine Halterung (314A), die an dem Sitzrahmen (311) ausgebildet ist und das schnurförmige Element (51, 52) trägt,
wobei die Halterung (314A) an einer Position angeordnet ist, an der die Halterung (314A) dem Abdeckungsabschnitt (332) gegenüberliegt, und
wobei das schnurförmige Element (51, 52) einen zwischen der Halterung (314A) und dem Belüftungsabschnitt (331) geführten Teil aufweist.

8. Fahrzeugsitzstruktur nach Anspruch 7,
wobei das Durchgangsloch (331A-331F) ein erstes Durchgangsloch (331A) und ein zweites Durchgangsloch (331B) aufweist, die mit einem Zwischenraum dazwischen an Positionen angeordnet sind, an denen das erste Durchgangsloch (331A) und das zweite Durchgangsloch (331B) dem Abdeckungsabschnitt (332) gegenüberliegen, und
wobei die Halterung (314A) zwischen dem ersten Durchgangsloch (331A) und dem zweiten Durchgangsloch (331B) angeordnet ist.

9. Fahrzeugsitzstruktur nach Anspruch 8,
wobei das erste Durchgangsloch (331A) und das zweite Durchgangsloch (331B) mit einem Zwischenraum dazwischen in einer Sitzbreitenrichtung angeordnet sind, und
wobei der durch den Belüftungsabschnitt (331), den Abdeckungsabschnitt (332) und das schnurförmige Element (51, 52) gebildete Belüftungsraum (V1, V2) mit einem Fahrzeuginnenraum an beiden Endseiten in der Sitzbreitenrichtung in Verbindung steht.

10. Fahrzeugsitzstruktur nach Anspruch 9,
wobei der Sitzrahmen (311) einschließt:
einen Querrahmen (311D), der sich in der Sitzbreitenrichtung erstreckt,
einen ersten Seitenrahmen (311B), der an einer Seite eines Endes des Querrahmens (311D) in einer Längsrichtung bereitgestellt ist und sich in einer Querrichtung erstreckt, die die Sitzbreitenrichtung schneidet, und
einen zweiten Seitenrahmen (311C), der an einer Seite des anderen Endes des Querrahmens (311D) in der Längsrichtung bereitgestellt ist und sich in der Querrichtung erstreckt,
wobei das erste Durchgangsloch (331A) und das zweite Durchgangsloch (331B) an Positionen bereitgestellt sind, die dem Querrahmen (311D) benachbart sind,
wobei die Halterung (314A) an dem Querrahmen (311D) befestigt ist,
wobei das schnurförmige Element (51, 52) einschließt:
ein erstes schnurförmiges Element (51), das entlang des Querrahmens (311D) und des ersten Seitenrahmens (311B) geführt ist, und
ein zweites schnurförmiges Element (52), das entlang des Querrahmens (311D) und des zweiten Seitenrahmens (311C) geführt ist,
das erste schnurförmige Element (51) von der Halterung (314A) getragen wird und in das erste Durchgangsloch (331A) eingesetzt ist, und
das zweite schnurförmige Element (52) von der Halterung (314A) getragen wird und in das zweite Durchgangsloch (331B) eingesetzt ist.

11. Fahrzeugsitzstruktur nach Anspruch 10,
wobei das erste Durchgangsloch (331A) auf einer Seite angeordnet ist, die näher an dem zweiten Seitenrahmen (311C) liegt als das zweite Durchgangsloch (331B),
wobei das zweite Durchgangsloch (331B) auf einer Seite angeordnet ist, die näher an dem ersten Seitenrahmen (311B) liegt als das erste Durchgangsloch (331A), und
wobei das erste schnurförmige Element (51) und das zweite schnurförmige Element (52) so geführt sind, dass eine Einbaurichtung des zweiten schnurförmigen Elements (52), das entlang des Querrahmens (311D) von dem zweiten Durchgangsloch (331B) in Richtung des zweiten Seitenrahmens (311C) installiert ist, eine Richtung ist, die einer Einbaurichtung des ersten schnurförmigen Elements (51) entgegengesetzt ist, das entlang des Querrahmens (311D) von dem ersten Durchgangsloch (331A) in Richtung des ersten Seitenrahmens (311B) installiert ist.

## Revendications

1. Structure de siège véhiculaire comprenant :
un matériau de coussin (32) qui forme une surface d'assise ;
un dispositif de soufflante (34) qui conditionne l'air autour de la surface d'assise ; et
une housse de siège (33) qui recouvre le matériau du coussin (32), **caractérisée en ce que**
la housse de siège (33) comprend
une partie de ventilation (331) qui communique avec le dispositif de soufflante (34), et est formée au niveau d'une position dans laquelle la partie de ventilation (331) recouvre une partie différente de la surface d'assise du matériau de coussin (32), la partie de ventilation (331) présentant une perméabilité à l'air, et
une partie de recouvrement (332) qui est située à l'extérieur du siège et formée pour recouvrir la partie de ventilation (331).

2. Structure de siège véhiculaire selon la revendication 1,
dans laquelle, dans la housse de siège (33), un composant de siège flexible (51, 52) est disposé entre la partie de ventilation (331) et la partie de recouvrement (332), et un espace de ventilation (V1, V2) est formé par la partie de ventilation (331), la partie de recouvrement (332) et le composant de siège (51, 52).

3. Structure de siège véhiculaire selon la revendication 2,
dans laquelle la partie de ventilation (331) comporte un trou traversant (331A-331F) au niveau d'une position dans laquelle la partie de ventilation (331) fait face à la partie de recouvrement (332).

4. Structure de siège véhiculaire selon la revendication 3,
dans laquelle le composant de siège (51, 52) est disposé entre la partie de ventilation (331) et la partie de recouvrement (332) dans un état dans lequel le composant de siège (51, 52) est inséré à l'intérieur du trou traversant (331A-331F) et un jeu est formé entre le composant de siège (51, 52) et un bord du trou traversant (331A-331F).

5. Structure de siège véhiculaire selon la revendication 3 ou 4, dans laquelle le composant de siège (51, 52) est supporté par le bord du trou traversant (331A-331F).

6. Structure de siège véhiculaire selon l'une quelconque des revendications 3 à 5,
dans laquelle le composant de siège (51, 52) est configuré à partir d'un élément en forme de cordon (51, 52) qui relie le dispositif de soufflante (34) ou un dispositif côté siège (71) monté sur un siège véhiculaire à un dispositif côté carrosserie de véhicule prévu sur un côté d'une carrosserie de véhicule dans laquelle est installé le siège de véhicule, et l'élément en forme de cordon (51, 52) est acheminé à travers le trou traversant (331A-331F).

7. Structure de siège véhiculaire selon la revendication 6, comprenant en outre :
un cadre de siège (311) qui supporte le matériau de coussin (32) ; et
un support (314A) qui est formé au niveau du cadre de siège (311) et qui supporte l'élément en forme de cordon (51, 52),
dans laquelle le support (314A) est disposé au niveau d'une position dans laquelle le support (314A) fait face à la partie de recouvrement (332), et
dans laquelle l'élément en forme de cordon (51, 52) comporte une partie acheminée entre le support (314A) et la partie de ventilation (331).

8. Structure de siège véhiculaire selon la revendication 7,
dans laquelle le trou traversant (331A-331F) comprend un premier trou traversant (331A) et un second trou traversant (331B) disposés avec un espace entre eux au niveau de positions dans lesquelles le premier trou traversant (331A) et le second trou traversant (331B) font face à la partie de recouvrement (332), et
dans laquelle le support (314A) est disposé entre le premier trou traversant (331A) et le second trou traversant (331B).

9. Structure de siège véhiculaire selon la revendication 8,
dans laquelle le premier trou traversant (331A) et le second trou traversant (331B) sont disposés avec un espace entre eux dans le sens de la largeur du siège, et
dans laquelle l'espace de ventilation (V1, V2) formé par la partie de ventilation (331), la partie de recouvrement (332) et l'élément en forme de cordon (51, 52) communique avec un espace intérieur de véhicule sur les deux côtés d'extrémité dans le sens de la largeur du siège.

10. Structure de siège véhiculaire selon la revendication 9,
dans laquelle le cadre de siège (311) comprend :
un cadre transversal (311D) qui s'étend dans le sens de la largeur du siège,
un premier cadre latéral (311B) qui est prévu sur un côté d'une extrémité du cadre transversal (311D) dans une direction longitudinale et s'étend dans une direction d'intersection qui coupe la direction de la largeur du siège, et
un second cadre latéral (311C) qui est prévu sur un côté de l'autre extrémité du cadre transversal (311D) dans la direction longitudinale et s'étend dans la direction d'intersection,
dans laquelle le premier trou traversant (331A) et le second trou traversant (331B) sont ménagés au niveau de positions qui sont adjacentes au cadre transversal (311D),
dans laquelle le support (314A) est fixé au cadre transversal (311D),
dans laquelle l'élément en forme de cordon (51, 52) comprend :
un premier élément en forme de cordon (51) qui est acheminé le long du cadre transversal (311D) et du premier cadre latéral (311B), et
un second élément en forme de cordon (52) qui est acheminé le long du cadre transversal (311D) et du second cadre latéral (311C),
le premier élément en forme de cordon (51) est supporté par le support (314A) et est inséré à l'intérieur du premier trou traversant (331A), et
le second élément en forme de cordon (52) est supporté par le support (314A) et est inséré à l'intérieur du second trou traversant (331B).

11. Structure de siège véhiculaire selon la revendication 10,
dans laquelle le premier trou traversant (331A) est disposé sur un côté plus proche du second cadre latéral (311C) que le second trou traversant (331B),
dans laquelle le second trou traversant (331B) est disposé sur un côté plus proche du premier cadre latéral (311B) que le premier trou traversant (331A), et
dans laquelle le premier élément en forme de cordon (51) et le second élément en forme de cordon (52) sont acheminés de telle sorte qu'une direction d'installation du second élément en forme de cordon (52) installé le long du cadre transversal (311D), du second trou traversant (331B) au deuxième cadre latéral (311C), est une direction opposée à une direction d'installation du premier élément en forme de cordon (51) installé le long du cadre transversal (311D), du premier trou traversant (331A) au premier cadre latéral (311B).
